# EUROPEAN PATENT APPLICATION

(11) **EP 2 233 207 A1**
(43) Date of publication of application: **29.09.2010**
(21) Application number: 09153963.5
(22) Date of filing: 27.02.2009
(51) Int. Cl.: B01J 21/18, B01J 23/755, B01J 23/881, B01J 37/02, B01J 37/08, C01B 31/00

(54) **Process for the preparation of metal-carbon containing bodies**

(71) Applicant: BASF SE, 67056 Ludwigshafen (DE)
(72) Inventor: Hoekstra, J, 3584 DX Utrecht (NL); Geus, John Wilhelm, 3723 GJ Bilthoven (NL); Jenneskens, L.W., 3762 DA Soest (NL)
(74) Representative: Hatzmann, Martin

(57) **Abstract**

The invention is directed to the production of metal-carbon containing bodies, which process comprises impregnating cellulose, cellulose-like or carbohydrate bodies with an aqueous solution of at least one metal compound, followed by heating the impregnated bodies in an inert and substantially oxygen-free atmosphere, thereby reducing at least part of the at least one metal compound to the corresponding metal or metal alloy.

## Description

The invention is directed to a process for the production of metal-carbon containing bodies, more in particular ferromagnetic bodies comprising a core of a ferromagnetic metal or metal alloy, wherein the surface of the core is covered with a layer of graphitic carbon or aggregates of such ferromagnetic particles, or for the production of graphitic bodies having catalytically active metal particles on the surface thereof, including particles of metals that are difficult to reduce.

Generally, catalytically active materials are applied to highly porous materials in more or less fine distributions. On the one hand this is done because many catalytically active materials sinter quickly at the temperatures at which the catalyst must be pre-treated or used. On the other hand one must use carrier materials in the case of very expensive catalytically active materials, such as precious metals, for example platinum, palladium, or ruthenium. In those cases the aim is to obtain a maximum number of atoms of the catalytically active component on the surface of the catalytically active particles. Therefore, these catalytically active materials are often used as particles with sizes of about 1 nm. When expensive catalytically active materials, such as precious metals, are used, carbon based carriers are very attractive. Once the catalyst is deactivated, the precious metal can easily be reclaimed by oxidising the carbon carrier. After oxidation the precious metal remains, and can be used again.

The mechanical strength of the catalyst carriers is of great importance in their application. This applies first of all to the use of catalysts suspended in a liquid phase. To keep the catalytically active particles well dispersed in the liquid, the liquid must be agitated vigorously. Furthermore, the catalyst must be separated from the liquid, for example by filtration or centrifugation, at the completion of the reaction. During this, carrier particles with a low mechanical strength will disintegrate, yielding extremely small particles. At the current state-of-the-art such particles cannot easily be separated by filtration or centrifugation. In particular when precious metals are used as the catalytically active materials this is unacceptable, because it will result in unacceptable losses of the expensive precious metal. The mechanical strength is also of great importance when the catalyst is used as a fixed bed catalyst. During the introduction of the catalyst bodies in the reactor virtually no attrition or dust generation is allowed. Dust generation results in a large pressure drop over the catalyst bed, while small attrition-generated particles are entrained by the reactant flow that is passed through the reactor. The formation of small particles by attrition also yields a catalyst that shows a non-stable performance in time. Very often the selectivity decreases. Both effects are unwanted, since a stable performance is necessary from a controlling and safety aspect.

According to the general state-of-the-art, activated carbon is used as the carbon carrier. Activated carbon is manufactured from natural materials, such as wood or peat. This is objectionable, because generally the characteristics of the activated carbon obtained from such materials are hard to control. Providing bodies comprising active carbon with constant, well-adjustable characteristics is therefore a known problem that hasn't been satisfactorily solved until now. An additional objection is the fact that, in the presence of (small amounts of) surfactants, such as detergents, in the liquid the catalyst particles must be dispersed in, catalyst bodies produced from activated carbon might disintegrate quickly.

In the case of bodies intended for a fixed catalyst bed, in which no attrition is allowed, the most obvious possibility is the use of carbon obtained by a thermal treatment of coconut shells. This provides very tough and mechanically strong bodies. However, the fact that the accessible surface of carbon obtained by thermal decomposition of coconut shells is small, is a drawback. As a result the obtainable catalytically active surface per unit volume is relatively small.

The final drawback of carrier materials produced from natural starting materials is their chemical composition. Natural materials often contain elements such as potassium, magnesium, calcium, and sulphur, which could cause problems during the use as catalyst or the recycling of the precious metals. There is, therefore, a strong technological need for carbon based carriers with a high mechanical strength and an extremely well controlled chemical composition.

It has been proposed to manufacture such catalyst carriers from carbon nanofibres or nanotubes. In WO 93/24214 (Hyperion) it is proposed to use carbon nanofibres or nanotubes as catalyst carriers in which the graphitic layers are oriented essentially in parallel to the filament axis. The use of such relatively long and straight carbon filaments as bodies with controllable dimensions is difficult.

The bodies of catalysts to be employed in a fixed catalyst bed must have a minimum size of about 1 mm. The pressure drop with smaller particles is too high with technical applications. It has proven to be very difficult to manufacture mechanically strong bodies from these size from the carbon nanofibres or nanotubes described above.

Indeed, for catalysts the dimensions and porosity are of great importance. In fixed catalyst beds the dimensions of the carrier bodies determine the pressure drop and the transport of reactants and reaction products through the catalyst bodies. In the case of liquid-suspended catalysts the transport of the reactants and reaction products is of great importance. The dimensions of the catalyst bodies are, as indicated above, of great importance to these transports, as well as to the separation of the bodies, for example by filtration of centrifugation. Another drawback is the fact that carbon nanofibres or nanotubes must be grown from metallic particles applied on carriers such as silicon dioxide or aluminium oxide. These carriers can often interfere with the application of the obtained carbon carriers in liquid phase reactions.

It has been proposed to manufacture carbon-based carrier bodies by thermal decomposition of spheres of microcrystalline cellulose WO 2007/131795 (Glatt). Such spheres are known in the state-of-the-art for the controlled release of medicinal compounds ("slow release"). It was found that carbon spheres with a very high mechanical strength could be produced this way. Considering the fact that microcrystalline cellulose spheres with dimensions of about 0.1 to 0.7 mm are produced industrially, the above carbon spheres can be manufactured with a consistent quality.

A drawback of microcrystalline cellulose is its high price. During the thermal treatment of the microcrystalline cellulose spheres their weight decreases by 80%. This means that the cost per unit weight of the carrier in comparison to carbon spheres obtained according to the state-of-the-art becomes very high.

The present invention is directed to the production of bodies based on metal and carbon, which bodies can easily be produced and have advantageous properties, especially in catalytic applications.

The present invention is based thereon that it has been found possible to produce various types of metal-carbon bodies, depending on the nature of the metal or metals that are used.

In the most general form of the invention it concerns a process for the production of metal-carbon containing bodies, which process comprises impregnating cellulose, cellulose-like or carbohydrate bodies with an aqueous solution of at least one metal compound, followed by heating the impregnated bodies in an inert and substantially oxygen-free atmosphere, thereby reducing at least part of the at least one metal compound to the corresponding metal or metal alloy.

In the first embodiment of the invention the objective is to produce carbon support bodies that have their surface covered with metal particles that are not, or only partially, encapsulated by graphitic layers. Such metal particles having a free-metal surface are catalytically active. With metals that cannot react to (unstable) metal carbides impregnation of the initial cellulose-containing bodies with a solution of a compound of the metal to be applied is sufficient. Merely raising the temperature of thus impregnated bodies to the decomposition temperature of the cellulose, results in bodies in which metallic particles have been deposited on the surface of the carbon bodies. Examples of metals not forming carbides are copper and silver. According to the present state-of-the-art reduction of usual copper catalysts is performed with hydrogen. In a technical reactor the reduction of the copper compound is a difficult process due to the high exothermic heat of the reduction reaction. The hydrogen reduction is therefore executed with an inert gas flow containing a very low content (e.g. , ½ vol. %) of hydrogen; the inert gas flow has to transport the thermal energy out of the reactor. With the catalyst precursors according to the first embodiment of this invention hydrogen is surprisingly not required, which is technically highly attractive in view of the wide explosion limits of hydrogen. Furthermore, the endothermic decomposition of the cellulose balances the exothermic reduction of copper, which can appreciably shorten the period of time involved in the reduction of the copper compound.

Metals that are able to form carbides, such as, molybdenum or iron, are also deposited by impregnation of the initial cellulose-containing bodies. Usually this leads to encapsulated metal particles. Surprisingly we have established that keeping such bodies at a temperature from about 350 to 600°C in a hydrogen-containing gas flow removes (part of) the encapsulating graphitic layers.

In a second embodiment of the invention, the metal or metals are ferromagnetic. It has been found that in case these metal(s) are used, the process results in an encapsulation of the metal by graphitic carbon layers, resulting in a core of a metal (alloy) and a shell of carbon, or an agglomerate of several or many of such encapsulated metal particles. The catalytically active component is applied after the thermal treatment according to the state-of-the-art.

In another embodiment of the invention, the at least one metal is based on a metal or metal compound that is difficult to reduce, such as cobalt, molybdenum, iron or combinations thereof. It has been shown that the reducing gases that are evolved during the thermal decomposition of the cellulose or related materials are very efficient in reducing the metal ions to metallic material, which is deposited on the graphitic carbon that is produced simultaneously by the heating.

Surprisingly, it was found that the impregnation of the cellulose or cellulose-like bodies with compounds of elements that upon reduction react to form ferromagnetic materials during the thermal decomposition of the cellulose, yields strongly ferromagnetic bodies. The ferromagnetic metallic particles are encapsulated by the graphitic layers after the thermal decomposition, and therefore no metal is dissolved upon treatment with a(n) (strong) acid. Therefore, the present invention also relates to ferromagnetic carbon bodies. Obviously, the invention also relates to the loading of carbon bodies with a ferromagnetic material with a low coercitive force.

Another aspect of the present invention relates to the separation of the carrier bodies according to the invention, or keeping them in suspension. The application of ferromagnetic carrier bodies has already been proposed in the past. Such bodies can easily be separated from liquids. In WO 99/46782 it is proposed to use carbon nanofibres or nanotubes containing ferromagnetic particles. This patent mentions the application of carriers with ferromagnetic particles with a small coercitive force to allow redispersion of the carrier bodies.

A problem that sometimes occurs with the use of carbon bodies, especially produced from microcrystalline cellulose, is the fact that the external surfaces of the spheres contain relatively few pores. The low porosity of the surface of carbon bodies produced from microcystalline cellulose has been mentioned in WO2007/131795 (Glatt). In the case of liquid phase processes with fast occurring catalytic reactions transport limitations are not apparent, such reactions almost exclusively take place at the external surface of the catalyst bodies. However, in the case of reactions proceeding more slowly it is a drawback, because catalytic particles that are present in the interior of the catalyst bodies are not easily accessible to the reactants. Nevertheless, attrition of the catalytically active particles from the surface of the carbonaceous bodies proceeds readily.

One further aspect of the invention relates to improving the porosity of the exterior surface of the carbon spheres obtained by thermal decomposition of cellulose containing compounds. Surprisingly, it was found that a treatment with acid compounds results in the hydrolysis of the cellulose containing compounds, inducing a much higher porosity of the external surface of the carbon bodies upon a subsequent thermal treatment.

According to this preferred embodiment of the invention, the specific surface area of the bodies is increased by increasing the porosity of the graphitic carbon. According to the invention this is done by treating the particles prior to thermally carbonizing with an acidic material. This creates an increased porosity, which is maintained during drying and carbonizing, resulting in a graphitic material having increased surface area, generally in the range of 100 to 1750 m²/g.

The ferromagnetic bodies or particles with the graphitic coating are catalytically active as such, for those reactions that are catalysed by graphitic carbon.

In a further preferred embodiment, the ferromagnetic bodies or particles may be loaded with a catalytically active material, such as a base metal or precious metal. For this the usual state of the art methods for applying catalytically active material may be used. Since the carbonaceous support is hydrophobic, the usually strongly retarding effect of water on the reduction to the metal is not or much less exhibited.

In the alternative embodiment, the metal-loaded graphitic carbon particles or bodies can be used as catalyst, for example for hydrotreating, in the case of cobalt and molybdenum as metals, or for Fischer-Tropsch in case of cobalt or iron.

Surprisingly, it was further found that from alternative cellulose and/or carbohydrate containing materials, such as soy meal, rice, furfural and derivatives, such as 2-hydroxyfurfural, sugar, hydroxyl ethyl cellulose, cellulose and derivatives and the like, spheres can be produced that also yield mechanically strong carbon spheres upon thermal decomposition. Considering the fact that soy meal is much cheaper in comparison to the very pure microcrystalline cellulose, this is an essential advantage. These carbon spheres form the core of the CNF material, which grows during the process on the surface of the spheres.

Another suitable starting material for the production of carbon spheres is sugar, or a mixture of sugar and microcrystalline cellulose or soy meal. During the thermal decomposition of spheres that predominantly or exclusively comprise sugar, care should be taken that during heating the temperature at which the sugar melts is passed by so quickly that the sugar will decompose before the melting process progresses. Dehydration of the sugar before raising the temperature to the decomposition temperature has been found to be effective too. Given the low price of sugar and the other cellulose containing materials, the present invention is of great importance for the technical application of mechanically strong carbon particles.

In general the cellulosic or carbohydrate starting materials will comprise organic materials, generally of renewable sources, that have the property that upon pyrolysis under inert conditions, a gas having reducing properties is obtained. According to a preferred procedure according to the present invention we start from carbonaceous bodies produced by a hydrothermal treatment of agriculturally produced materials, such as, sugars, starch, soy meal, (hemi)cellulose, as well as dehydrated products of the above compounds, such as, furfural and 2-hydroxyfurfural. Preferably dehydration af the above compounds is performed as described in Bo Hu, Shu-Hong Yu, Kan Wang, Lei Liu and Xue-Wei Xu Dalton Trans. 2008, 5414-5423 and in references mentioned therein. After impregnation of the hydrothermally treated bodies, the thermal treatment according to the procedure of the present invention is executed. Alternatively a solution of the metal compounds can also be mixed within the water employed in the hydrothermal treatment.

According to a further preferred embodiment it is thus possible to use relatively cheap materials for the production of the (ferromagnetic) support bodies, such as soy flour, sugar, or mor ein general carbohydrates, but also cellulose and cellulose like materials, including micro-crystalline cellulose, and mixtures of two or more thereof.

The ferromagnetic carbon spheres according to the invention can easily be adhered to a mesh of a ferromagnetic metal, such as iron or nickel. The mesh can be magnetised with a permanent magnet or an electromagnet. The significantly changed magnetic field around the filaments of the mesh results in a strong binding of the ferromagnetic carbon spheres to the mesh. By covering the metallic mesh with a silicon dioxide layer the metallic mesh can be rendered inert. A major advantage of attachment by a ferromagnetic force is the fact that the carbon spheres can easily be removed from the mesh by demagnetising the mesh.

Shaping of the initial cellulose containing material can be carried out according to the present state-of-the-art. Extrusion, if desired to rings or e.g., to trilobs can be executed. If required, addition of carboxymethylcellulose, hydroxyethylcellulose, hydroxypropylcellulose, methylcellulose, polyvinylalcohol, polyvinylpyrolidon, polyethyleneglycol can be employed to facilitate the extrusion and to raise the mechanical properties of the green extrudates. Small spheres to be employed for catalysts suspended in liquids are preferably produced by hydrothermal treatment as described in Bo Hu, Shu-Hong Yu, Kan Wang, Lei Liu and Xue-Wei Xu Dalton Trans. 2008, 5414-5423 and in references mentioned therein.

### Example 1

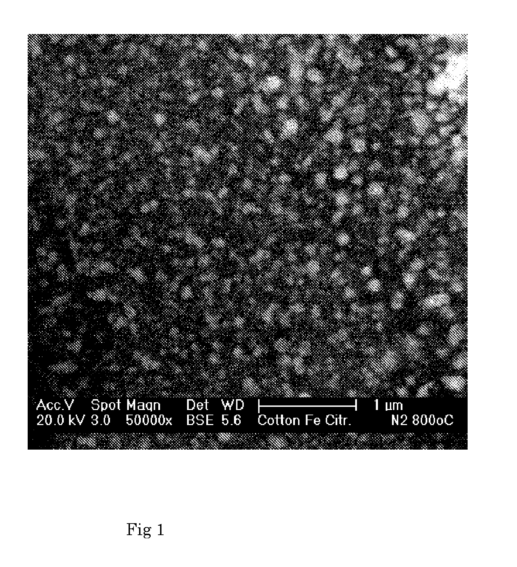

A piece of cotton fabric of 1 × 1 cm² was wet-impregnated with a solution of ammonium iron citrate in water. Next the impregnated fabric was dried in air under ambient conditions. Subsequently, the fabric was kept at 800°C in an inert nitrogen gas flow. This resulted in a ferromagnetic gauze of graphitic fibres of 0.2 mm diameter densely loaded with iron particles of diameters around 10 to 20 nm as evident from the accompanying micrograph (Fig. 1) which represents an image taken with back-scattered electrons in an scanning electron microscope. The back-scattered electrons are imaging preferably the heavy elements.

## Claims

1. Process for the production of metal-carbon containing bodies, which process comprises impregnating cellulose, cellulose-like or carbohydrate bodies with an aqueous solution of at least one metal compound, followed by heating the impregnated bodies in an inert and substantially oxygen-free atmosphere, thereby reducing at least part of the at least one metal compound to the corresponding metal or metal alloy.

2. Process according to claim 1, wherein the metal(s) is(are) selected from ferromagnetic metals or alloys.

3. Process according to claim 2, in which process the ferromagnetic particles comprise a core of a ferromagnetic metal or metal alloy, wherein the surface of the core is covered with a layer of graphitic carbon or aggregates of such ferromagnetic particles.

4. Process according to claim 2 or 3, wherein the ferromagnetic core is a soft magnetic material.

5. Process according to claim 4, wherein the ferromagnetic core is nickel or a nickel alloy.

6. Process according to claim 1, wherein the said bodies are graphitic particles having catalytically active metal particles on the surface thereof, including particles of metals that are difficult to reduce, more in particular cobalt, molybdenum, iron and combinations of two or more thereof.

7. Process according to claim 1-6, wherein the said particles form are selected from soy, carbohydrates, such as sugar, cellulosic materials, microcrystalline cellulose, or mixtures of two or more thereof.

8. Process according to claim 7, wherein the said material is soy flour, or a mixture of soy flour and sugar.

9. Process according to claim 1-8, wherein the said material in body form has an average size between 1 micron and 1 mm.

10. Process according to claim 1-9, wherein the said impregnated particles, prior to drying and thermally carbonizing, are treated with an acidic compound.

11. Process according to claim 1-10, wherein the thermal carbonizing comprises heating for a period between 5 min and 4 hours, at a temperature between 400°C and 1250°C.

12. Process according to claim 1-5, wherein the ferromagnetic bodies are loaded with a catalytic active material.

13. Ferromagnetic bodies obtainable by the process of claims 1-5.

14. Bodies obtainable by the process of claim 6 for use as a catalyst.

15. Bodies according to claim 14 having as metals an alloy of cobalt and molybdenum as catalyst for hydrotreating.

16. Bodies according to claim 13-15, wherein the surface area is between 100 and 1750 m²/g (as determined by nitrogen adsorption).
